(19) Europäisches Patentamt
European Patent Office
Office européen des brevets

(11) **EP 1 995 012 A2**

(12) **EUROPEAN PATENT APPLICATION**

(43) Date of publication:
26.11.2008 Bulletin 2008/48

(51) Int Cl.:
*B23H 7/06* (2006.01)       *B23H 7/10* (2006.01)

(21) Application number: 08154966.9

(22) Date of filing: 22.04.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 23.05.2007 JP 2007136779

(71) Applicant: Fanuc Ltd
Yamanashi 401-0597 (JP)

(72) Inventors:
• Arakawa, Yasuo
Yamanashi 401-0597 (JP)
• Yamaguchi, Meguru
Yamanashi 401-0597 (JP)

(74) Representative: Ward, James Norman
HASELTINE LAKE
5th Floor, Lincoln House
300 High Holborn
London WC1V 7JH (GB)

(54) **Method for determining wire supporting point in wire-cut electrical discharge machine and measuring member for practicing the same**

(57)     A measuring member (10,20) having a conical section with a known vertex angle is inserted into a guide hole through a trumpet-shaped inner surface (11,21) (wire guiding surface) formed by rotating a convex about the axis of the guide hole. Then, the surface of the conical section of the measuring member stops at the point of tangential contact $(P_0, Q_0)$ with the inner surface. The point at which the wire electrode is supported, measured from the reference wire supporting point $(A_0, B_0)$, can be determined from the height of a specific point on the measuring member in the stopped state and the distance from this specific point to the vertex of the conical section of the measuring member.

FIG. 1

**Description**

BACKGROUND OF THE INVENTION

1. Field of the Invention

The present invention relates to a method for determining points at which the stretched wire electrode is supported in the wire guides in a wire-cut electrical discharge machine and a measuring member used for practicing this method. More specifically, the present invention relates to a method that does not require the wire electrode to be actually stretched for measuring the points at which the wire electrode is supported in the upper and lower wire guides that are displaced from each other to slant the wire electrode at an angle required for taper machining (slant angle corresponding to the taper angle), and a measuring member to be inserted into the openings of the wire guides (die guides) for the above measurement.

2. Description of the Related Art

Typically, in a well-known machining method using a wire-cut electrical discharge machine, a voltage is applied to a wire electrode stretched between upper and lower wire guides, a workpiece (object to be machined) is securely placed on a table that is driven to move in relation to the wire electrode and is moved along X and Y axes that are horizontally orthogonal to each other, and a electrical discharge is continuously generated in a machining gap between the wire electrode and the workpiece to machine the workpiece into a desired shape. For taper machining, which is a well-known machining technique used to obtain conical or pyramidal faces, or any other sloping faces, with desired angles, the upper wire guide is horizontally (in the X and Y directions) displaced with respect to the lower wire guide to slant the wire electrode with respect to the plane on which the workpiece is placed.

The slant angle of the wire electrode for taper machining corresponds to the slope angle of the machined surface (taper angle) and is usually numerically specified in a machining program. For example, the slant angle is specified as "30 degrees with respect to the Z direction", or "20 degrees with respect to the Z direction", where the plane on which the workpiece is placed is a XY plane (plane of Z = 0). To slant the wire electrode as specified, the upper wire guide is horizontally displaced with respect to the lower wire guide from the position where the upper and lower wire guides are vertically aligned with each other to the position where the wire electrode is exactly slanted as specified by the program. Typically, this relative displacement is carried out by moving a single drive unit supporting one of the wire guides (upper wire guide, for example) in the horizontal direction along the U axis parallel to the X axis, and along the V axis parallel to the Y axis.

Although the amount of relative displacement of the upper wire guide with respect to the lower wire guide can be determined by calculation to some extent, it is difficult to determine an exact amount of displacement for slanting the wire electrode as specified. A wire guide is typically composed of a member called "die guide" or "wire die guide" that has a guide hole through which the wire electrode is threaded. To calculate the exact amount of displacement of the upper wire guide with respect to the lower wire guide, it is necessary to find exact points at which the wire electrode (more specifically, its straight section) is actually supported in the guide holes of the die guides when the wire electrode is slanted at a desired angle θ (θ = 30 degrees, for example).

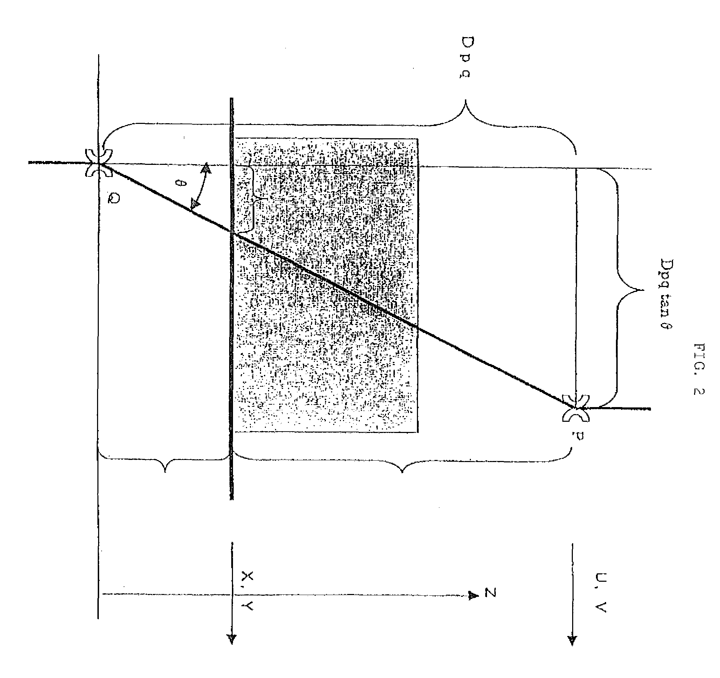

Assuming that, as shown in FIG. 2, the slant angle of the wire electrode is θ, the "possible point at which the wire electrode is supported" in the upper guide is P(θ), and the "possible point at which the wire electrode is supported" in the lower guide is Q(θ), the amount of displacement (difference between the XY positions of the upper and lower guides) can be calculated as Dpq x tan θ' from the distance Dpq (distance in the Z direction) between the points P(θ) and Q(θ) and the slant angle θ. The points P(θ) and Q(θ) will be hereinafter referred to as "wire supporting points".

In taper machining as well, the machined shape is required to achieve the specified absolute dimensions on the reference plane (control plane) of the workpiece, so it is necessary to determine a precise distance from the wire supporting points P(θ) and Q(θ) to the reference plane of the workpiece (distance in the Z direction). Since the position in the Z direction of the reference plane of the workpiece has been specified in advance, measuring the above distance eventually determines the wire supporting points P(θ) and Q(θ). As discussed in the detailed description of embodiments of the present invention, the XY positions of the wire supporting points can be identified as the XY positions of the upper and lower guides, so it is necessary to determine only the positions in the Z direction of the wire supporting points.

As described above, when the wire electrode is slanted, it is extremely important, but not easy, to find the wire supporting points (positions in the Z direction). This is because, due to the stiffness of the wire electrode, it is difficult to identity a single point in the area over which the slanted wire electrode bends as it enters the guide hole of each die guide (in the downward opening of the upper die guide and in the upward opening of the lower die guide).

For this reason, the amount of relative displacement of the upper and lower die guides that is calculated on the assumption that the wire electrode is supported at a predicted or intended point (single point) at which the wire electrode is assumed to bend is unreliable. The slant angle of the wire electrode achieved by the relative displacement of the upper and lower wire guides on the basis of the amount of displacement thus calculated does not match the specified slant angle (for example, a slant angle of 29 degrees is achieved when the specified slant angle is 30 degrees).

One technique for solving this problem is disclosed in Japanese Patent Application Laid-Open No. 58-28424. In this technique, taking into consideration the stiffness of the wire electrode, the opening of the die guide has an arcuate inner surface having a vertical cross-section with a large radius of curvature R for guiding the wire electrode, and the points at which the wire electrode is actually supported when the wire electrode bends along the gently curved inner surface of the die guide opening are determined on the basis of the radius R of the arcuate guiding surface of the die guide opening. Such a shape of the inner surface of the die guide opening is also favorable for smooth feeding of the wire electrode.

However, it is practically difficult to provide simple means for precisely measuring the radius R of the arcuate inner surface in the opening of each die guide. Since the die guides typically have trumpet-shaped wire guiding surfaces with an appropriate R narrowing toward the depth, the shape in the deep and narrow portion is hard to measure. Although radius R of the arcuate inner surfaces could be determined from design values without actual measurement, the die guides produced from the design values would inevitably have some dimensional errors because the die guides are made of extremely rigid, abrasion-resistant materials such as diamond and ruby, which are hard to grind to an exact shape specified in design. If the die guides were produced with dimensional errors, the exact shape of the wire guiding surfaces could not be determined from the design values.

Another method for calculating the wire supporting points in the die guides is proposed (See Japanese Patent Application Laid-Open No. 1-193126, for example). In this method, the wire supporting points are inversely calculated from the points at which a jig touches and detects the wire electrode stretched at an angle between the upper and lower guides while the machine is in operation. Unfortunately, this method is time-consuming, because the wire electrode must be actually stretched and the measurement must be performed by touching and detecting the wire electrode at each angle. Another technique for inversely calculating the points at which the wire electrode is actually supported is disclosed (See Japanese unexamined patent application publication No. 11-165219, for example). In this technique, taper machining is performed by varying the positions of the upper and lower guides and each machining result is measured. The points at which the wire electrode is actually supported are calculated from the difference between the actual taper angle and the taper angle corresponding to the slant angle of the wire electrode simply calculated from the positions in the upper and lower guides. Unfortunately, this method is extremely time-consuming and requires the object to be machined and other consumables to determine the wire electrode supporting points.

Any of the above methods require the machine to be brought into operation on-site to determine the wire supporting points and reduce its availability for production machining.

SUMMARY OF THE INVENTION

One object of the present invention is to solve the above problems associated with the taper machining using wire-cut electrical discharge machines by providing a method for determining the wire supporting points in wire guides in a simple manner without actually stretching the wire electrode and performing experimental machining. Another object of the present invention is to provide a measuring member used for practicing the above method.

The present invention enables the wire supporting points in the die guides to be determined in a simple manner using a measuring member having a tapered-pin section in the form of a cone or pyramid with a known vertex angle. More specifically, in a wire-cut electrical discharge machine in which the wire electrode is threaded through the guide holes each having an opening with a trumpet-shaped inner surface formed by rotating a convex surface (arcuate surface, for example) about the axis of the guide hole, the measuring member is inserted into the die guide opening such that the surface or ridges of the tapered-pin section are guided along the wire guiding surface provided by the inner surface of the die guide until the surface or ridges of the tapered-pin section touches the wire guiding surface and the measuring member stops. By measuring the position at which the measuring member stops, the point that is supporting the wire electrode slanted at an angle half the angle of the vertex can be determined.

The method for determining the wire supporting points according to the present invention is applicable in wire-cut electrical discharge machines in which the wire electrode is slanted for taper machining between the upper and lower wire guides each having a die guide with a guide hole through which the wire electrode is threaded. The guide hole of the die guide has a trumpet-shaped inner surface formed by rotating a convex surface about the axis of the guide hole. The method for determining the wire supporting points according to the present invention includes the steps of: inserting a measuring member having a known length and a tapered-pin section in the form of a cone or pyramid with a known vertex angle into the die guide such that the surface or ridges of the tapered-pin section are guided along the wire guiding surface provided by the inner surface of the die guide; measuring the position of the measuring member when the surface or ridges of the tapered-pin section of the inserted measuring member touch the wire guiding surface of the die guide and the measuring member stops; and determining the point that is supporting the wire electrode slanted by an angle half the vertex angle of the tapered-pin section from the measured position of the measuring member.

The above method can further include the steps of: inserting the measuring member into the guide hole opening in the die guide such that surface or ridges of the tapered-pin section are guided along the inner surface of the die guide opening until the measuring member stops; measuring the height of a predetermined point on the stopped measuring member from the undersurface of the die guide or a reference plane on which the die guide is placed; and determining the point that is supporting the wire electrode slanted at an angle half the known vertex angle of the tapered-pin section of the measuring member from the measured height of the predetermined point on the measuring member, the length of the measuring member, and the point at which the wire electrode is supported when its slant angle is 0 degrees.

In the step of measuring the height of the predetermined point on the measuring member, a plurality of measuring members having conical or pyramidal pin sections with different vertex angles may be used.

Furthermore, the measuring member of the present invention can be used for determining the wire supporting points in the wire-cut electrical discharge machine in which the wire electrode is slanted for taper machining between the upper and lower wire guides each having a die guide with an opening having a trumpet-shaped inner surface formed by rotating a convex surface about the axis of the die hole. The measuring member has a known length and a tapered-pin section in the form of a cone or pyramid with a known vertex angle.

The measuring member may also have a cylindrical section integrally formed with or connected to the tapered-pin section.

The measuring member may also have a protective section surrounding and protecting the tapered-pin section.

According to the present invention, it is possible to determine a relationship between the angle at which the wire electrode is stretched and the wire supporting points (points that are theoretically assumed to be the points at which the wire electrode bends). Unlike the conventional methods that can measure the positions of the wire supporting points only in the wire-cut electrical discharge machine, the method of the present invention enables the positions of the wire supporting points to be measured in the die guides before being mounted in the wire-cut electrical discharge machine and does not occupy the wire-cut electrical discharge machine for this measurement.

Furthermore, the measurement can be performed in locations other than where the wire-cut electrical discharge machine is installed. For example, the die guide manufacturers can perform measurement on the die guides they manufactured, and attach the data of measurement results as the specification data to be shipped with the die guides. The die guide users or machine operators are only required to enter the values in the attached data to the machine. Furthermore, the corrective operations on the machine that required considerable man-hours are eliminated, so the efficiency of the work is improved.

BRIEF DESCRIPTION OF THE DRAWINGS

The above and other objects and features of the present invention will be apparent from the following description of embodiments of the present invention with reference to the accompanying drawings, in which:

FIG. 1 shows a wire electrode travel path in a wire-cut electrical discharge machine;

FIG. 2 is a diagram illustrating that the amount of displacement of the upper guide in relation to the lower guide (difference between the XY positions of the upper and lower guides) can be determined from the slant angle $\theta$ of the wire electrode and the distance Dpq from P($\theta$) to Q($\theta$) in the Z direction, where P($\theta$) is the point in the upper guide at which the wire electrode can be supported and Q($\theta$) is the point in the lower guide at which the wire electrode is supported;

FIG. 3 illustrates the wire electrode stretched at a slant angle of 30 degrees between the upper and lower wire guides;

FIG. 4 is a vertical cross-sectional view of the die guide with a guide hole having a convex inner surface;

FIG. 5A shows the point of contact of the wire electrode and the point at which the wire electrode is supported in the lower die guide when the wire electrode is stretched at a slant angle of 30 degrees, to illustrate that the point of contact and the wire supporting point depend on the angle at which the wire electrode is stretched;

FIG. 5B shows the point of contact of the wire electrode and the point at which the wire electrode is supported in the lower die guide when the wire electrode is stretched at a slant angle of 20 degrees, to illustrate that the point of contact and the wire supporting point depend on the angle at which the wire electrode is stretched;

FIG. 6A shows a measuring member having a tapered-pin section in the form of a cone (or pyramid) with a vertex angle of 60 degrees being used for measurement;

FIG. 6B shows a measuring member having a tapered-pin section in the form of a cone (or pyramid) with a vertex angle of 40 degrees being used for measurement;

FIG. 7 is a plot of the measured angles vs. the wire supporting points;

FIG. 8A shows a height gauge being used for measurement of the wire supporting point;

FIG. 8B shows a micrometer being used for measurement of the wire supporting point;

FIG. 9A shows a typical measuring member;

FIGS. 9B to 9G show respective modifications of the typical measuring member shown in FIG. 9A.

## DETAILED DESCRIPTION OF THE PREFERRED EMBODIMENTS

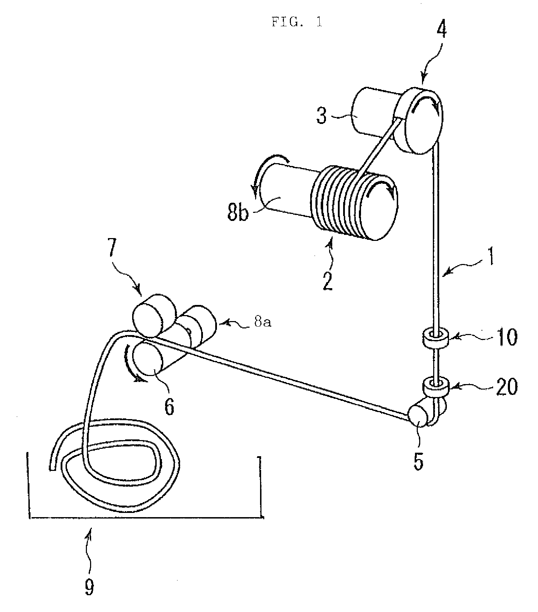

FIG. 1 shows a wire electrode travel path in a wire-cut electrical discharge machine. In FIG. 1, a long wire electrode 1 wound around the wire bobbin 2 is unreeled and travels around the brake shoe 4 to the upper wire guide 10. Before wire electric discharge machining starts, the wire electrode 1 is stretched between the upper wire guide 10 and the lower wire guide 20. and then the wire electrode 1 is threaded through the lower wire guide 20 and redirected by the lower guide roller 5 so as to be substantially horizontal. Then, the wire electrode 1 passes between the feed roller 6 and the pinch roller 7 and is collected in the wire collection box 9.

The feed motor 8a drives the feed roller 6 to pull the wire electrode 1 to transport the wire electrode 1 along the above route at a predetermined speed. The wire bobbin 2 is driven by the supply motor 8b and rotates at an appropriate speed adapted to the pulling force such that the unreeled wire electrode 1 moves smoothly. Furthermore, the brake 3 operates the brake shoe 4 to keep the wire electrode 1 in tension between the upper wire guide 10 and the lower wire guide 20.

Although not shown in FIG. 1, the wire electric discharge machine also includes, as well known, a workpiece table on which a workpiece (object to be machined) is placed, a mechanism for supplying a discharge voltage to the wire electrode 1, a power supply, various motors, besides the feed motor 8a and the supply motor 8b, for feeding the wire electrode 1, and associated driving mechanisms.

Controllers (not shown) are also provided as well known to control the feed motor 8a, supply motor 8b, various axis drive motors, and brake 3, as well as for control of the discharge voltage. A typical axis configuration for positioning and speed control is a five-axis configuration composed of an X, Y, Z, U, and V axes, in which the X and Y axes are used to control the positions (and moving speed) of the workpiece table in the X and Y directions. The Z, U, and V axes are the axes for adjusting the positions of the upper guide 10 in the Z, U, and V directions. The direction of displacement along the U axis is set in parallel to the direction of displacement along the X axis, while the direction of displacement along the V axis is set in parallel to the direction of displacement along the Y axis.

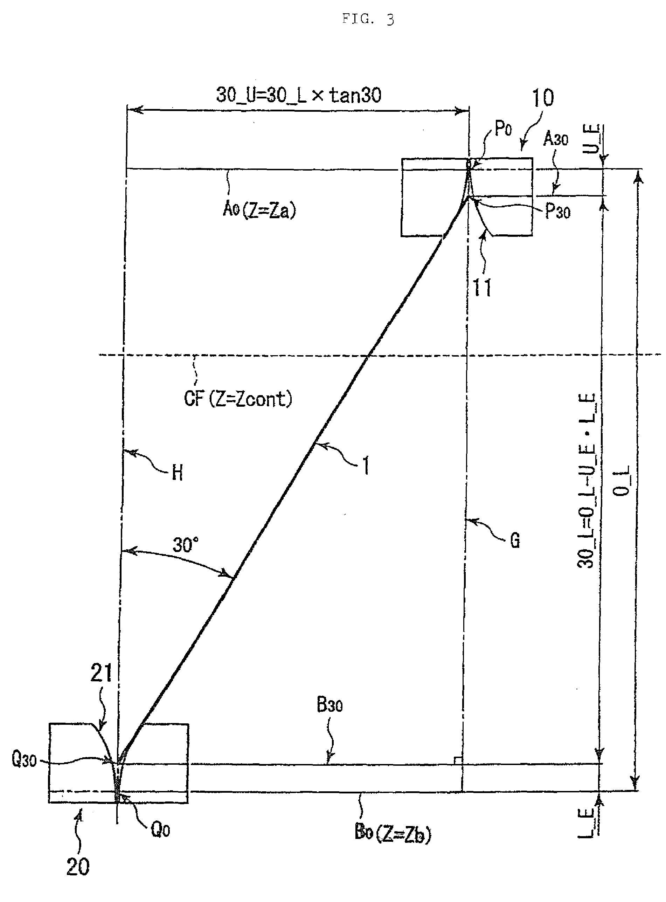

In the present invention, a prime challenge is to determine the points (positions in the Z direction) at which the wire electrode 1 is supported when it is stretched at a slant angle between the upper and lower wire guides (upper and lower die guides) 10, 20. Now, the state of the wire electrode 1 being stretched at a slant angle of 30 or 20 degrees will be discussed with reference to FIGs. 3 to 5B.

In FIG. 3, the wire electrode 1 is stretched between the upper and lower wire guides at a slant angle of 30 degrees. In this figure, the die guide 10 is a guide member representing the upper wire guide, and the die guide 20 is a guide member representing the lower wire guide. The die guides 10, 20 have guide holes through which the wire electrode 1 is threaded. The upper and lower die guides 10, 20 are supported on driving mechanisms (not shown), with the guide holes widening downward and upward, respectively. As described above, the driving mechanism has a configuration with U, V, and Z axes. Here, it is assumed that the upper die guide 10 is displaceable in the Z direction (up and down in FIG. 3), U direction (right and left in FIG. 3), and V direction (orthogonal to the plane of FIG. 3) along the Z axis, U axis, and V axis, respectively.

The upper die guide 10 is assumed herein to have the same size and shape as the lower die guide 20, although it is not obligatory. As shown in FIG. 3. the lower section of the guide hole of the upper die guide 10 and the upper section of the guide hole of the lower die guide 20 have trumpet-shaped inner surfaces. More specifically, as described above, the inner diameter of the guide hole of the upper die guide 10 gradually enlarges downward, and the inner diameter of the guide hole of the lower die guide 20 gradually enlarges upward.

The guide holes of the upper and lower die guides 10, 20 have symmetrical inner surfaces 11, 21 which are formed by rotating a gentle "convex surface" around the axes of the guide holes (which are parallel to the Z direction when positioned as shown in FIG. 3).

The trumpet-shaped inner surface 11 of the upper die guide 10 gradually narrows upward to a vertical "cylindrical surface", and the trumpet-shaped inner surface 21 of the lower die guide 20 gradually narrows downward to a vertical "cylindrical surface". At the points P0, Q0 where the gaps between the outer surface of the wire electrode 1 and the inner surfaces of the die guides 10, 20 become narrowest, the trumpet-shaped inner surfaces 11, 21 are transformed to substantially "cylindrical surfaces". Each of the points P0, Q0 is located on the axis of each guide hole and represents the three-dimensional point of each of the upper and lower die guides 10, 20.

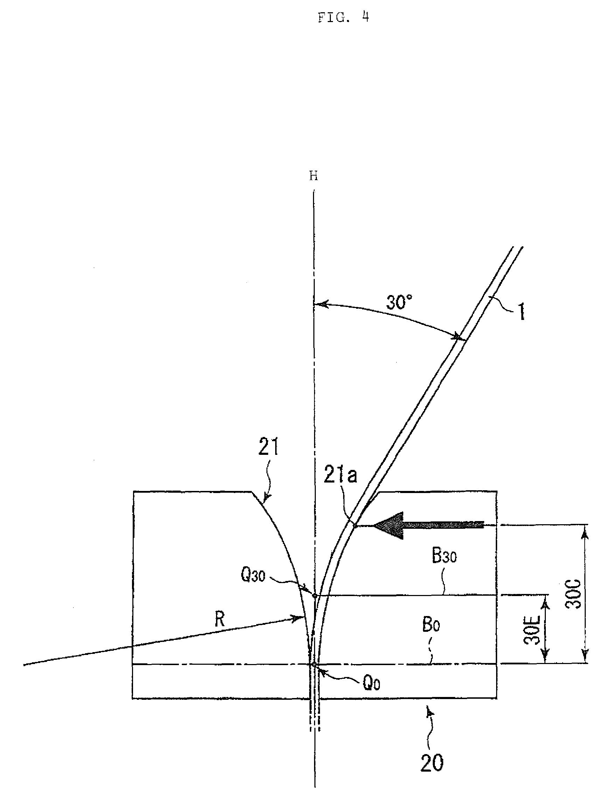

The inner diameter of the "cylindrical section" of the guide hole of each of the upper and lower die guides 10, 20 is slightly larger than the outer diameter of the wire electrode 1 so that the wire electrode 1 can smoothly move therethrough. A typical "convex surface" for providing the inner surfaces 11, 21 of the guide holes has a radius of curvature R in the cross section along the Z direction, as illustrated in the inner surface 21 in FIG. 4.

Now, the points at which the wire electrode 1 is supported in the upper and lower die guides 10, 20 will be considered. When the wire electrode 1 is supported in the vertical direction (Z direction), there is no problem wherever the wire electrode 1 is supported in the die guides 10, 20. When the wire electrode 1 is not slanted (for vertical machining), the wire supporting points (points in the Z direction) are typically assumed to correspond to the points P0, Q0 that represent the three-dimensional points of the upper and lower die guides 10, 20 in the Z direction. Taking this into consideration, the position in the Z direction of the point P0 will be hereinafter referred to as "reference wire supporting point in the upper guide", and the position in the Z direction of the point Q0 will be hereinafter referred to as "reference wire supporting point in the lower guide". In FIG. 3, the reference wire supporting point in the upper guide is indicated by the line A0 (Z = Za) and the reference wire supporting point in the lower guide is indicated by the line B0 (Z = Zb).

When the wire electrode 1 is slanted at 30 degrees, for example, from the vertical direction as shown in FIG. 3, the wire electrode 1 bends within the upper and lower die guides 10, 20, so an exact amount of relative displacement between the upper and lower die guides 10, 20 cannot be determined and consequently the desired slant angle of the wire electrode 1 (corresponding to the taper angle) cannot be achieved.

FIG. 4 shows the wire electrode bent within the guide hole of the lower die guide 20 as it is threaded therethrough. As can be seen from this figure, as long as the slope of the inner surface 21 near the entrance edge of the guide hole is closer to horizontal than the slant angle of the wire electrode 1, the wire electrode 1 gradually closes to the inner surface 21 as it advances deep into the guide hole, and is brought into contact with inner surface 21 at a certain point (position). This point (position) will be hereinafter referred to as "point of contact" (contact position) 21a.

From the point of contact 21a, the wire electrode 1 bends along the inner surface 21, and becomes in parallel to the Z direction at the point Q0. The distance in the Z direction between the point Q0 and the point of contact 21a is denoted by 30C.

Although not shown in this figure, in the guide hole of the upper die guide 10 as well, the wire electrode 1 follows the same route, but in the opposite direction, entering the guide hole from below, starting to bend at the point of contact with the inner surface 11. bending along the inner surface 11, and becoming parallel to the Z direction at the point P0.

When the wire electrode 1 follows such a route, the slant angle of the wire electrode 1 calculated from the reference wire supporting points P0 and Q0 (i.e., the slant angle of the straight section connecting the point P0 to the point Q0) is obviously different from the actual slant angle of the wire electrode 1 (30 degrees in this example).

To avoid this problem, attention is paid to the section of the wire electrode 1 that is stretched straight. Both ends of the straight section of the wire electrode 1 can be considered as the points of contact with the upper and lower die guides 10, 20. More specifically, the straight line connecting the point of contact in the upper die guide 10 and the point of contact in the lower die guide 20 (point 21a in FIG. 4) can be considered to represent the section of the wire electrode 1 that is stretched straight. Then, the points P30, Q30 at which this straight line intersects the axes G, H (axes parallel to the Z direction and passing through the points P0, Q0) of the upper and lower die guides 10, 20 are defined as "wire supporting points".

According to this definition, the points P30 and P0 are different only in the position in the Z direction, and the same in the positions in the U and V directions. Similarly, the points Q30 and Q0 are different only in the position in the Z direction, and the same in the positions in the X and Y directions. As described above, the reference wire supporting points P0, Q0 are the positions representing the upper and lower die guides 10, 20 and are determined by the positions on the X, Y, U, and V axes. Accordingly, unknown amounts to be measured are the positions of the points P30 and Q30 in the Z direction.

In FIGs. 3 and 4, the line passing through the point P30 and orthogonal to the Z direction is denoted by A30, and the line passing through the point Q30 and orthogonal to the Z direction is denoted by B30. If the distance from the straight line A0 to the straight line A30 is U_E, the distance from the straight line B0 to the straight line B30 is L_E, the distance between the straight lines A0 and B0 is 0_L, and the distance between the straight lines A30 and B30 is 30_L as shown in FIG. 3, the following equation (1) is established:

$$30\_L = 0\_L - (U\_E + L\_E) \qquad \ldots (1)$$

Then, the amount of displacement (30_U) of the upper die guide 10 with respect to the lower die guide 20 required to slant the wire electrode 1 at 30 degrees is expressed by the following equation (2). This amount of displacement corresponds to the distance between the line G (line parallel to the Z direction and passing through the point P0 = axis of the upper die guide 10 and its guide hole) and the line H (line parallel to the Z direction and passing through the point Q0 = axis of the lower die guide 20 and its guide hole) in FIG. 3.

$$\text{Amount of displacement } 30\_U = 30\_L \times \tan(30 \text{ degrees})$$

$$= (0\_L - (U\_E + L\_E)) \times \tan(30 \text{ degrees})$$

$$\ldots (2)$$

To calculate an exact amount of displacement 30_U, it is necessary to determine exact values of U_E and L_E in the above equation (2). If U_E and L_E are precisely determined, it is also possible to determine an exact distance (difference in the Z direction) between the wire supporting points and the control plane CF (plane on which the machining route is specified in the machining program, which is also referred to as reference plane).

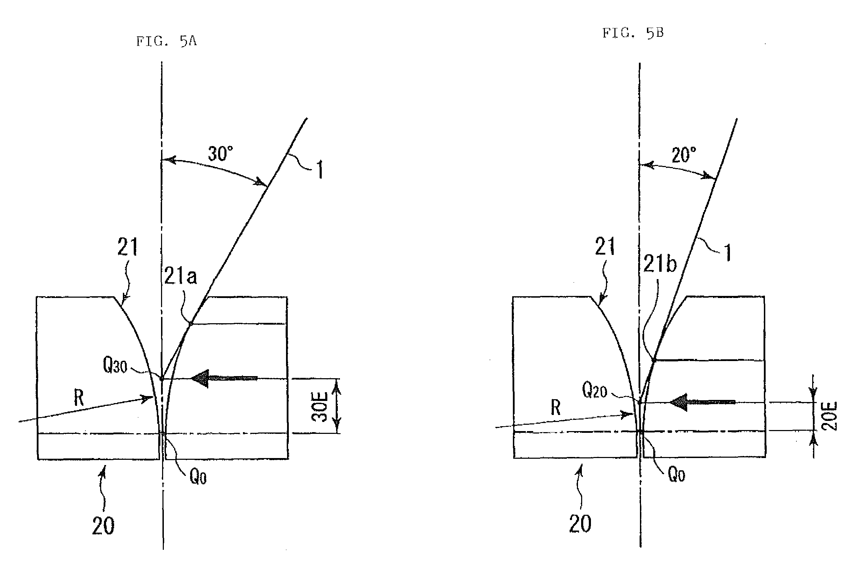

As is apparent from the above geometrical consideration, when the wire electrode 1 is slanted at a different angle other than 30 degrees between the upper and lower die guides 10, 20 shown in FIGs. 3 and 4, the "points of contact" of the wire electrode 1 with the upper and lower die guides 10, 20 and the wire supporting points vary accordingly. Next, referring to FIGs. 5A and 5B, how the "points of contact" of the wire electrode 1 with the die guides and the wire supporting points in the die guides depend on the slant angle of the wire electrode 1 will be discussed.

FIG. 5A shows the points of contact of the wire electrode 1 and the wire supporting points when the slant angle of the wire electrode 1 is 30 degrees (as shown in FIGs. 3 and 4), and FIG. 5B shows the points of contact of the wire electrode 1 and the wire supporting points when the slant angle of the wire electrode 1 is 20 degrees.

As apparent from the comparison between FIGs. 5A and 5B, the point of contact 21b in the lower die guide 20 when the slant angle of the wire electrode 1 is 20 degrees (FIG. 5B) is lower than the point of contact 21a in the lower die guide 20 when the slant angle is 30 degrees (FIG. 5A). Accordingly, the wire supporting point Q20 in the lower die guide 20 when the slant angle of the wire electrode 1 is 20 degrees (FIG. 5B) is lower than the wire supporting point Q30 in the lower die guide 20 when the slant angle is 30 degrees (FIG. 5A).

Accordingly, the distance 20E from the reference wire supporting point Q0 to the wire supporting point Q20 when the slant angle of the wire electrode 1 is 20 degrees is shorter than the distance 30E from the reference wire supporting point Q0 to the wire supporting point Q30 when the slant angle of the wire electrode 1 is 30 degrees (20E<30E).

As can be seen from the above description referring to FIGs. 3 to 5B, to set the slant angle of the wire electrode 1 to a desired value, it is necessary to measure the positions in the Z direction of the wire supporting points P, Q in the upper die guide 10 and lower die guide 20 (distances from the reference wire supporting points Q0, P0) corresponding to the desired angle.

In the present invention, noting that the line tangent to the inner surface 21 (or 11) of the guide hole represents the direction of extension of the straight section of the wire electrode 1, an attempt has been made to reproduce this tangent line by inserting in the guide hole a "member" capable of representing the tangent line without stretching the wire electrode 1 and to find the point of intersection of the reproduced tangent line with the axis of the guide hole. As a result, it is found that a member having a tapered-pin section in the form of a cone or pyramid with a known vertex angle can be used for this measurement.

More specifically, when the die guide used as the upper die guide 10 or lower die guide 20 has an opening with a trumpet-shaped inner surface that is formed by rotating a convex (with a radius of curvature R) about the axis of the die guide, a measuring member having the "tapered-pin section in the form of a cone or pyramid with a known vertex angle" is inserted so that the surface or ridges of the tapered-pin section are guided along the wire guiding surface provided by the inner surface (11 or 21) until the surface or ridges of the tapered-pin section touch the wire guiding surface and the measuring member stops. The point at which the measuring member stops is measured. In such a simple manner, it is possible to determine the wire supporting point (distance measured from the reference point in the die guide) for the wire electrode slanted at an angle half the vertex angle of the tapered-pin section.

When the measuring member has a tapered-pin section in the form of a perfect cone, the vertex and the vertex angle of the cone forming the "tapered-pin section" is referred to herein as "vertex of the tapered-pin section" and "vertex angle of the tapered-pin section" respectively. If the tapered-pin section of the measuring member is perfectly conical, the "vertex of the tapered-pin section" is actually the vertex of the cone. If not (for example, the tapered-pin section is not perfectly conical with its tip truncated or rounded), the "vertex of the tapered-pin section" is a hypothetical point to which the surface of the conical section converges.

Similarly, when the measuring member has a tapered-pin section in the form of a perfect pyramid (for example, triangular, quadrangular, or hexagonal pyramid), the vertex and the vertex angle of the pyramid forming the tapered-pin section will be referred to as "vertex of the tapered-pin section" and "vertex angle of the tapered-pin section" respectively. If the tapered-pin section of the measuring member is perfectly pyramidal, the "vertex of the tapered-pin section" is actually the vertex of the pyramid. If not (for example, the tapered-pin section is not perfectly pyramidal with its tip truncated or rounded), the "vertex of the tapered-pin section" is a hypothetical point to which the ridges of the pyramidal section converge.

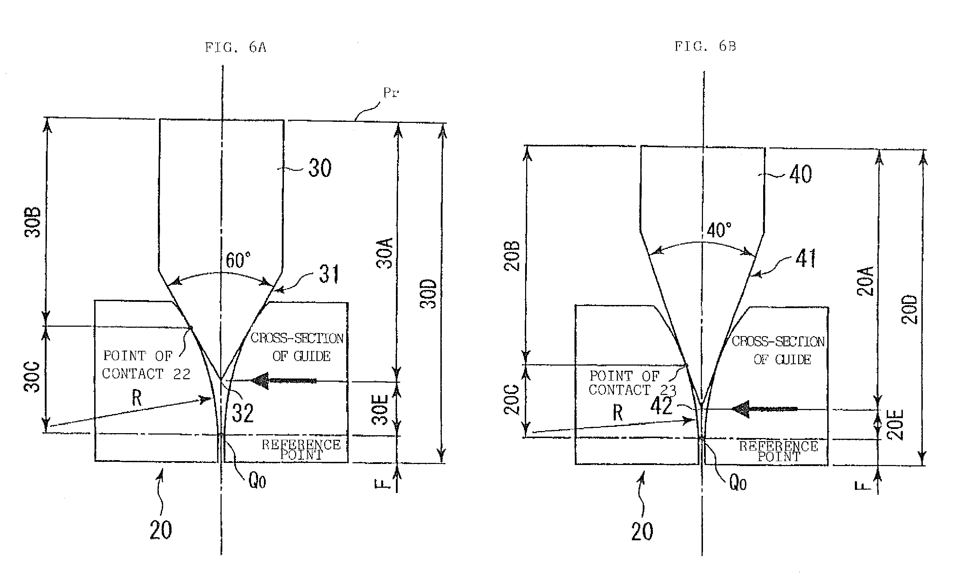

The vertex angle of the tapered-pin section of the measuring member is equal to the double the slant angle (corresponding to the taper angle) of the wire electrode 1 measured at the wire supporting point. Typically, a measuring member having a tapered-pin section with a vertex angle of 2θ is used to measure the wire supporting point for the wire electrode 1 slanted at θ. FIGs. 6A and 6B show measuring members 30, 40 having tapered-pin sections 31, 41 with vertex angles of 60 and 40 degrees respectively being used for measurement.

In the case in FIG. 6A, the measuring member 30 having a tapered-pin section 31 with a vertex angle of 60 degrees is inserted through a trumpet-shaped opening into the guide hole (inner surface 21) along the axis of the guide hole such that the surface or ridges of the tapered-pin section are guided along the wire guiding surface (inner surface) 21 having an arcuate cross-section of radius of curvature R, until the surface or ridges of the tapered-pin section 31 touch the inner surface 21 (wire guiding surface) and the measuring member 30 stops. At this moment, the position in the Z direction of the point of contact 22 (to be precise, a collection of points of contact forming the circumference) measured from the reference wire supporting point (reference point) Q0 coincides with the position in the Z direction of the point 21a (see FIG. 5A) at which the wire electrode 1 is brought into contact with the lower die guide 20. Accordingly, in FIG. 6A as well, the distance in the Z direction of the point of contact 22 from the reference wire supporting point Q0 is denoted by 30C (as in the case in FIG. 4 where the distance in the Z direction of the point of contact 21a from the reference wire supporting point Q0 is denoted by 30C).

When the measuring member 30 stops as described above, the height 30D from the undersurface of the die guide 20 to the upper surface of the measuring member 30 (this upper surface where the height 30D is measured will be hereinafter referred to as "measured point"). Then, the distance 30E from the reference wire supporting point (reference point) Q0 to the vertex 32 of the tapered-pin section 31 can be calculated by the following equation (3):

$$30E = 30D - 30A - F \qquad \qquad ...(3)$$

In the above equation, 30A is the distance in the Z direction from the "measured point" on the measuring member 30 (i.e., the upper surface of the measuring member 30) to the vertex 32 of the tapered-pin section 31 of the measuring member 30 and is equal to the length of the measuring member 30. Here, the "measured point" on the measuring member 30 is not limited to the upper surface of the measuring member 30, but may be any point as long as the height of the measuring member 30 can be measured and the distance in the Z direction from the vertex 32 of the tapered-pin section 31 of the measuring member 30 can be obtained as a known amount. Reference symbol F is the distance in the Z direction from the undersurface of the die guide 20 to the reference wire supporting point Q0. The value of F can be treated substantially as the preset value for each die guide 20. More specifically, the reference wire supporting point Q0 is defined as the distance F (approximate distance to the point where the guide hole is assumed to be narrowest) from the undersurface (plane of Z = 0) of the die guide 20. In this case, F is obviously a known amount equal to the Za or Zb shown in FIG. 3.

In the case in FIG. 6B, the measuring member 40 having a tapered-pin section 41 with a vertex angle of 40 degrees is inserted through a trumpet-shaped opening into the guide hole (inner surface 21) along the axis of the guide hole such that the tapered-pin section 42 is guided along the wire guiding surface (inner surface 21) of the same die guide 20 as in FIG. 6A until the tapered-pin section 41 of the measuring member 40 touches the inner surface 21 (wire guiding surface) and the measuring member 40 stops. At this moment, the position in the Z direction of the point of contact 23 (to be precise, a collection of points of contact forming the circumference) measured from the reference wire supporting point (reference point) Q0 is equal to position in the Z direction of the point 21a (see FIG. 5A) at which the wire electrode 1 slanted at 20 degrees is brought into contact with the lower die guide 20. The distance in the Z direction of the point of contact 23 measured from the reference point Q0 is denoted by 20C. Obviously, the distance 20C in the Z direction of the point of contact 23 from the reference point Q0 is shorter than the distance 30C in the Z direction of the point of contact 22 from the reference point Q0 in FIG. 6A.

When the measuring member 40 stops as described above, the height 20D of the "measured point" on the measuring member 40 (here, the upper end of the measuring member 40) is measured. Then, the distance 20E from the reference point can be calculated by the following equation (4):

$$20E = 20D - 20A - F \qquad \qquad ...(4)$$

In the above equation, 20A is the distance in the Z direction from the "measured point" on the measuring member 40 (i.e., the upper end of the measuring member 40) to the vertex 42 of the tapered-pin section 41 of the measuring member 40. Here, as in the case in FIG. 6A, the "measured point" on the measuring member 40 is not limited to the upper end of the measuring member 40, but may be any point as long as height of the measuring member 40 can be measured and the distance in the Z direction from the vertex 42 of the tapered-pin section 41 of the measuring member 40 can be obtained as a known amount. The details of F are as described above.

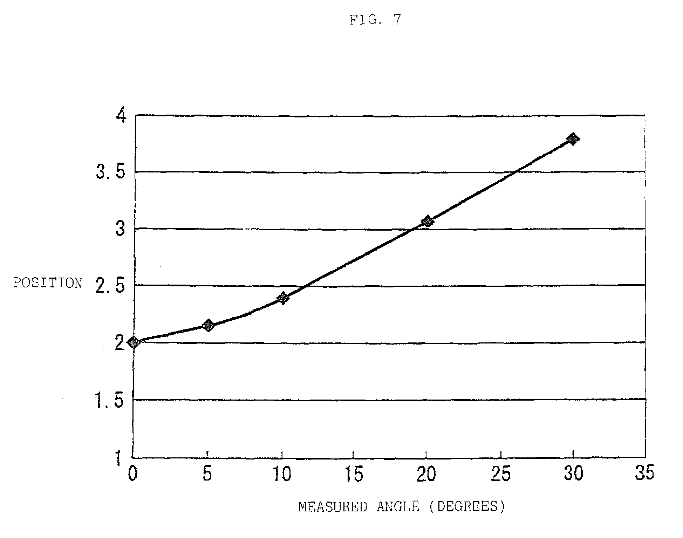

If another measuring member having a tapered-pin section in the form of a cone (or pyramid) with a different vertex angle a is provided, it is possible to measure the wire supporting point (distance in the Z direction from the reference point) for the wire electrode slanted at an angle half the vertex angle ($\alpha$/2). For example, if two measuring members having tapered-pin sections in the form of a cone (or pyramid) with vertex angles 20 and 10 degrees, respectively, it is possible to determine as described above the wire supporting points (distance in the Z direction from the reference point) for the wire electrode slanted at 10 and 5 degrees, respectively. FIG. 7 shows a plot of the results of these exemplary measurements. The points plotted in FIG. 7 correspond to the results of measurement at 30, 20, 10, 5, and 0 degrees. The numerical values on the vertical axis are the "positions in the Z direction of the wire supporting points" in millimeters for example. The point plotted at 0 degrees is not the actually measured value but a theoretical value at the slant angle of 0 degrees, which corresponds to F in the above equations (3) and (4). In this example, F = 2 (mm).

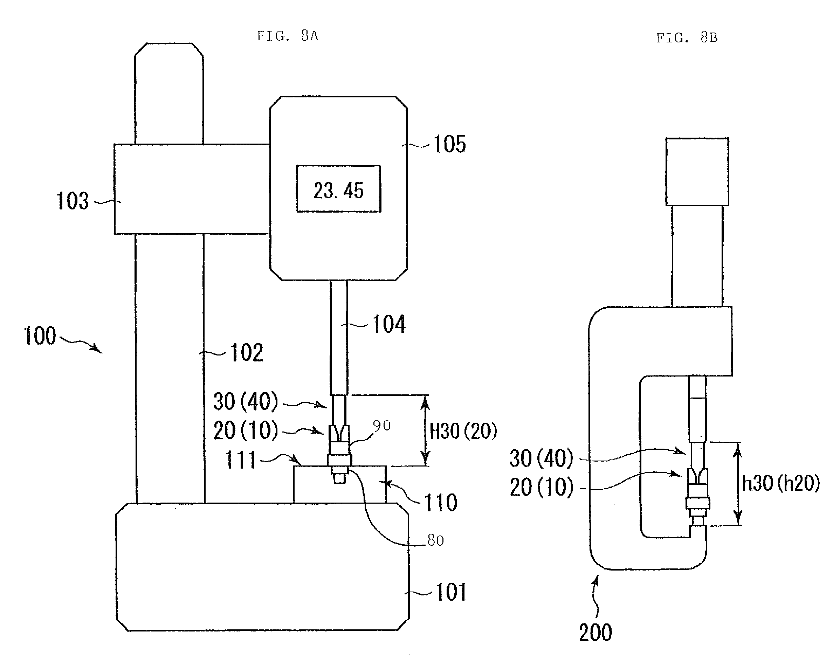

For the above measurement, a height gauge 100 can be employed as in FIG. 8A. The height gauge 100 itself is of a well-known type having a reference table 110 and a guide column 102 mounted on a base 101. The reference table 110 has a mounting hole formed therein for mounting the item to be measured. The guide column 102 extends in the vertical direction and has a slider 103 attached thereto by means of a sliding mechanism (not shown) so that the slider 103 can be moved in the vertical direction manually or by the aid of a motor (not shown).

An operation unit 105 including a display screen, etc. is attached to the slider 103. A probe 104 extends from the undersurface of the operation unit 105 and has an attachment mechanism on its lower end for holding the item to be measured. The operation unit 105 houses a mechanism for displaying in the screen the vertical position of the slider 103 (for example, a coefficient circuit and a pulse encoder connected to a motor moving the slider 103 up and down) indicating the vertical position of the item attached to the probe 104.

The operation unit 105 is also provided with a reset button (not shown) for zero-resetting the displayed value at any point in the vertical direction.

Here, the item to be measured is the lower die guide 20 or upper die guide 10. The measurement procedure will now be described referring to FIG. 6A in which the measuring member 30 with a vertex angle of 60 degrees is inserted into the lower die guide 20.

First, the measuring member 30 is attached to the end of the probe 104 by means of an attachment mechanism. The axis of the probe 104 is parallel to the vertical direction and coincides with the axis of the mounting hole in the reference table 110 and with the axis of the measuring member 30 attached to the lower end of the probe 104. The die guide 20 is mounted on the reference table 110 by fitting a portion of the supporting member 90 supporting the die guide 20 into the mounting hole 80 of the reference table 110. The center axis and inner diameter of the mounting hole 80 in the reference table 110 coincide with the center axis and outer diameter of the portion (portion to be fit into the mounting hole 80) of the supporting member 90 so that the axis of the die guide 20 coincides with the axis of the mounting hole 80 of the reference table 110.

Accordingly, when the measuring member 30 is attached to the lower end of the probe 104 and the die guide 20 is placed on the reference table 110, the axis of the measuring member 30 coincides with the axis of the die guide 20.

Next, the operation unit 105 is operated (manually if required) to slowly lower the probe 104 to insert the tapered-pin section of the measuring member 30 into the guide hole of the die guide 20. Then, as described above, the tapered-pin section 31 of the measuring member 30 touches the inner surface 21 of the die guide 20 and the measuring member 30 stops. This situation is as shown in FIG. 6A.

When the probe 104 equipped with the measuring member 30 stops, the height H30 of the probe 104 is measured and displayed in millimeters, for example, in the screen of the operation unit 105 (23.45 mm in the example shown in FIG. 8A). The height (23.45 mm) displayed in the screen is the distance (H30) from the upper surface 111 of the reference table 110 of the height gauge 100 to the undersurface (reference plane) of the probe 104. The distance H30 does not directly represent the wire supporting point (in the example in FIG. 5A, Q30 located at a distance 30E in the Z direction from the reference wire supporting point Q0).

The wire supporting point described above is usually calculated by the following equation (5):

$$\text{Wire supporting point (point in the Z direction)} = \text{H30} - \Delta \qquad \dots (5)$$

Here, the value of a variable $\Delta$ required to determine the wire supporting point (point in the Z direction) from the measured value H30 may be determined such that the distance 30E calculated by the equation (3) (i.e., the position of the vertex 32 of the tapered-pin section 31 of the measuring member 30) in the description of FIG. 6A, for example, becomes equal to H30 - Δ (by means of a kind of calibration). Once the value of Δ is determined, the wire supporting point can be calculated by the above equation (5) using the same value of Δ, as long as the height of the reference wire supporting point (Q0 or PO) in the mounted die guide does not change.

Accordingly, when the slant angle of the wire electrode is 30 degrees, the wire supporting point in the wire guide (point Q30 in FIG. 5A) can be determined by detecting the position of the vertex 32 of 60 degrees (30 degrees x 2) of the tapered-pin section of the measuring member inserted into the opening of the wire guide.

The above measurement procedure is also applicable when another measuring member (such as the measuring member 40) having a different vertex angle (other than 60 degrees) is used, although it is necessary to increase or decrease the value of Δ in the above equation (5) by the amount equivalent to the length of the measuring member to be attached to the probe 104 (i.e., distance from the reference plane of the probe 104 to the vertex of the tapered-pin section).

For more simplified measurement, a micrometer may be used as shown in FIG. 8B to measure the distance (length) from the undersurface of the die guide 20 (or 10) to the upper end of the measuring member 30 (or 40) inserted in the die guide 10 or 20 as shown in FIG. 6A or FIG. 6B, for example.

The value h30 measured by the micrometer in FIG. 8B is in such a relationship with the wire supporting point (position in the Z direction) as is expressed by the following equation (6):

$$\text{Wire supporting point (slant angle: 30 degrees)} = h30 - 30A - F' \quad \dots (6)$$

The measured value h20 is in such a relationship with the wire supporting point (point in the Z direction) as is expressed by the following equation (7):

$$\text{Wire supporting point} = h20 \cdot 20A \cdot F' \quad \dots (7)$$

In the equations (6) and (7), which are similar to the preceding equations (3) and (4), 30A is the distance (length) from the vertex 32 to the upper end of the measuring member 30, and 20A is the distance (length) from the vertex 42 to the upper end 42 of the measuring member 40. Reference symbol F' is the distance in the Z direction from the undersurface of the die guide 20 (including peripheral members) to the reference wire supporting point Q0. Similar to the above F, the value of F' can be treated substantially as the preset value for each die guide. More specifically, the reference wire supporting point Q0 may be defined as the distance F' (approximate distance to the point where the guide hole is assumed to be narrowest) from the undersurface (plane of Z = 0) of the die guide 20 (including peripheral members).

Other measuring members having different shapes other than those of the above measuring members 30 and 40 may be used, as long as they have tapered-pin sections in the form of a cone or pyramid with a known vertex angle, and the length from the vertex of the tapered-pin section to the measured point (end face opposite to the vertex, for example) on the measuring member is known.

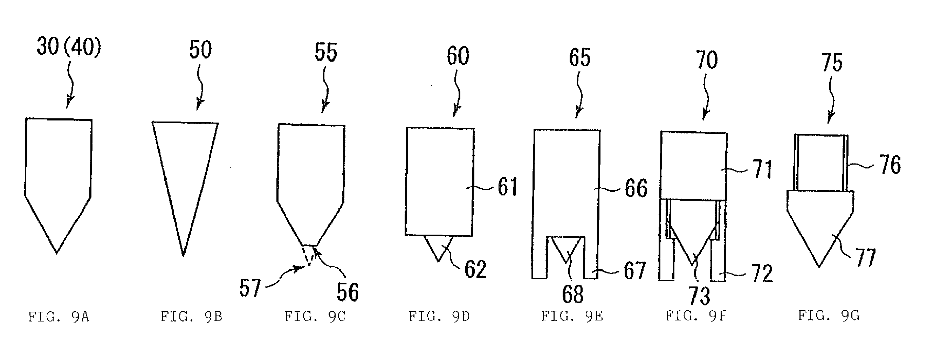

FIGs. 9A to 9G show general views of exemplary measuring members. The measuring member in FIG. 9A is the same type as the measuring members 30 and 40 and is formed from an upper cylindrical section and a lower tapered-pin section in the form of a cone or pyramid. The vertex of the tapered-pin section corresponds to the lower end of the measuring member.

The measuring member 50 in FIG. 9B is entirely composed of a tapered-pin section in the form of a cone (or pyramid). For safety of the user, the lower end of the measuring member 55 in FIG. 9C is truncated by slightly removing the pointed end of the measuring member 55 shown in FIG. 9A. The lower end 56 is a flat surface. The vertex 57 of this tapered-pin section is a single point located outside.

The measuring member 60 in FIG. 9D has a large-diameter base 61 and a tapered-pin section 62 attached thereto. The measuring member 65 in FIG. 9E has a tapered-pin section 68 depending from the interior of a cylindrical sheath 66 and a protective section 67 depending from the lower end of the cylindrical sheath 66 to surround and protect the tapered-pin section 68.

The measuring member 70 in FIG. 9F is similar in structure to the measuring member 65, but has a double-walled cylindrical sheath 71 and a cylindrical/tapered-pin section 73 depending from the innermost area. Reference numeral 72 denotes the protective section depending from the lower end of the cylindrical sheath 71 to surround and protect the cylindrical/tapered-pin section 73. The measuring member 75 in FIG. 9G is a modification of the one shown in FIG. 9A and has a shorter cylindrical and conical section 77 and a lug 76 attached thereto. The lug 76 can be held by hand, and can also be used for attachment to the probe 104 of the height gage 100 if its shape and size is suitably designed.

**Claims**

1.  A method of determining a point at which the wire electrode is supported when a wire-cut electrical discharge machine is used for taper machining, the wire-cut electrical discharge machine performing electric discharge machining using the wire electrode stretched between upper and lower wire guides, each wire guide having a die guide with a guide hole through which the wire electrode is threaded, the guide hole having a trumpet-shaped inner surface formed by rotating a convex about the axis of the guide hole, the method comprising the steps of:

    inserting a measuring member having a known length and a tapered-pin section in the form of a cone or pyramid with a known vertex angle into the guide hole of the die guide such that the surface or ridges of the tapered-pin section are guided along a wire guiding surface provided by the inner surface of the die guide;
    measuring the position of the measuring member when the surface or ridges of the tapered-pin section touch the wire guiding surface of the die guide and the measuring member stops; and
    determining the point at which the wire electrode slanted at an angle half the angle of the vertex of the tapered-pin section of the measuring member is supported on the basis of the measured position of the measuring member.

2.  The method according to claim 1, further comprising the steps of:

    inserting the measuring member into the guide hole of the die guide, guiding the vertex of the tapered-pin section along the axis of the guide hole until the surface or ridges of the tapered-pin section touches the trumpet-shaped inner surface of the die guide and the measuring member stops;
    measuring the height of a predetermined point on the measuring member in the stopped state from the undersurface of the die guide or a reference plane on which the die guide is placed; and
    determining the point at which the wire electrode slanted at an angle half the known angle of the vertex of the tapered-pin section of the measuring member is supported on the basis of the measured height of the predetermined point on the measuring member, length of the measuring member, and a reference wire supporting point corresponding to the point at which the wire electrode slanted at 0 degrees is supported.

3.  The method according to claim 2, wherein, in the step of measuring the height of the predetermined point on the measuring member, a plurality of measuring members having tapered-pin sections with different vertex angles are used for measurement.

4.  A measuring member for determining the point at which the wire electrode is supported when a wire-cut electrical discharge machine is used for taper machining, the wire-cut electrical discharge machine performing electric discharge machining using the wire electrode stretched between upper and lower wire guides each having a die guide with a guide hole through which the wire electrode is threaded, the guide hole having a trumpet-shaped inner surface formed by rotating a convex about the axis of the guide hole, wherein the measuring member has a known length and a tapered-pin section in the form of a cone or pyramid with a known vertex angle.

5.  The measuring member according to claim 4, further comprising a cylindrical section integrally formed with or connected to the tapered-pin section.

6.  The measuring member according to claim 4 or 5, further comprising a protective section surrounding and protecting the tapered-pin section of the measuring member.

7.  A method of determining the point at which the wire electrode is supported when a wire-cut electrical discharge machine is used for taper machining, the wire-cut electrical discharge machine performing electric discharge machining using the wire electrode stretched between upper and lower wire guides each having a die guide with a guide hole through which the wire electrode is threaded, the method comprising the steps of:

    (1) inserting a measuring member, formed from a rod-shaped section and a conical section or a part of the conical section which has a first vertex angle and is attached to one end of the rod-shaped section, into the guide hole of the die guide in a manner such that the axis of the rod-shaped section of the measuring member coincides with the axis of the guide hole;
    (2) detecting the position of the vertex of the conical section of the measuring member by measuring the position of the measuring member when the measuring member inserted into the guide hole of the die guide can no longer advance and stops;

(3) determining, from the position and angle of the detected vertex of the conical section, the angle of the straight section of the wire electrode stretched between the upper and lower guides and the points at which the straight section of the wire electrode is supported in the upper and lower wire guides;

(4) performing the steps (1) to (3) in sequence using measuring members having conical sections with first, second, third, and other known vertex angles, respectively; and

(5) plotting relationships between the points at which the straight section of the wire electrode stretched between the upper and lower wire guides is supported and the slant angles of the straight section of the wire electrode, on the basis of a plurality of measurement data obtained in step (4).

EP 1 995 012 A2

FIG. 1

13

FIG. 2

FIG. 3

FIG. 4

FIG. 5B

FIG. 5A

FIG. 6A

FIG. 6B

EP 1 995 012 A2

FIG. 7

FIG. 8B

FIG. 8A

EP 1 995 012 A2

30 (40)

50

55

60

65

70

75

61

66

71

76

62

67

72

77

57      56

68

73

FIG. 9A      FIG. 9B      FIG. 9C      FIG. 9D      FIG. 9E      FIG. 9F      FIG. 9G

**EP 1 995 012 A2**

## REFERENCES CITED IN THE DESCRIPTION

### Patent documents cited in the description

- JP 58028424 A
- JP 1193126 A
- JP 11165219 A